(19) Europäisches Patentamt
European Patent Office
Office européen des brevets

(11) EP 0 693 200 B1

(12) # EUROPÄISCHE PATENTSCHRIFT

(45) Veröffentlichungstag und Bekanntmachung des Hinweises auf die Patenterteilung:
**09.07.1997 Patentblatt 1997/28**

(21) Anmeldenummer: **94911842.6**

(22) Anmeldetag: **11.04.1994**

(51) Int Cl.[6]: **G06F 15/80**, G06K 9/66

(86) Internationale Anmeldenummer:
**PCT/DE94/00396**

(87) Internationale Veröffentlichungsnummer:
**WO 94/24635 (27.10.1994 Gazette 1994/24)**

(54) **VERFAHREN ZUR KLASSIFIZIERUNG VON OBJEKTEN**

OBJECT SORTING PROCESS

PROCEDE DE CLASSEMENT D'OBJETS

(84) Benannte Vertragsstaaten:
**AT BE CH DE DK ES FR GB GR IE IT LI LU MC NL PT SE**

(30) Priorität: **10.04.1993 DE 4311557**

(43) Veröffentlichungstag der Anmeldung:
**24.01.1996 Patentblatt 1996/04**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder:
- **WAGNER, Thomas
D-91052 Erlangen (DE)**
- **BÖBEL, Friedrich
D-91080 Uttenreuth (DE)**
- **BAUER, Norbert
D-91058 Erlangen (DE)**
- **HAKEN, Hermann
D-70569 Stuttgart (DE)**

(74) Vertreter: **Münich, Wilhelm, Dr.
Kanzlei Münich, Rösler, Steinmann
Wilhelm-Mayr-Str. 11
80689 München (DE)**

(56) Entgegenhaltungen:


- **ELECTRONICS LETTERS, Bd.6, Nr.25, 10. Dezember 1970, STEVENAGE GB Seiten 826 - 828 B. G. BACHELOR ET AL. 'Learning in potential-function classifier'**
- **ELECTRONICS AND COMMUNICATION ENGINEERING JOURNAL, Bd.4, Nr.5, Oktober 1992, LONDON GB Seiten 219 - 300 N.M. ALLINSON; A.W. ELLIS 'Face recognition: combining cognitive psychology and image engineering'**
- **INTERNATIONAL NEURAL NETWORK CONFERENCE, 9. - 13. JULI 1990, PARIS, FR Seiten 318 - 321, XP000145295 M. SAERENS 'A preliminary study of a competitive cost function applied to clustering'**
- **BIOLOGICAL CYBERNETICS, 1989, WEST GERMANY, VOL. 62, NR. 2, PAGE(S) 107 - 111, ISSN 0340-1200 Haken H et al 'A new learning algorithm for synergetic computers'**
- **NEURAL AND SYNERGETIC COMPUTERS. PROCEEDINGS OF THE INTERNATIONAL SYMPOSIUM, SCHLOSS ELMAU, WEST GERMANY, 13-17 JUNE 1988, ISBN 3-540-50339-0, 1988, BERLIN, WEST GERMANY, SPRINGER-VERLAG, WEST GERMANY, PAGE(S) 2 - 15 Haken H 'Synergetics in pattern recognition and associative action'**
- **H.Haken, " Synergetic Computers and Cognition. A Top-Down Approach to Neural Nets ", Springer, Berlin 1991, Seiten 36 - 42 und 51 - 59**


Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 693 200 B1

## Beschreibung

### Technisches Gebiet

Die Erfindung bezieht sich auf ein Verfahren zur Klassifizierung von Objekten unter Verwendung eines elektrischen Signalaufnehmers, der die zu klassifizierenden Objekte abtastet, und für jedes Objekt M Abtastwerte liefert, die an eine Auswerteeinheit angelegt sind.

### Stand der Technik

An vielen Stationen eines industriellen Fertigungsprozesses ist für eine adäquate Bearbeitung oder Prüfung eines Werkstückes seine vorherige Identifikation nötig. Das verwendete Identfkikationsverfahren soll dabei eine möglichst hohe Erkennungsrate bei gleichzeitig möglichst niedriger Zahl von Fehlklassifikationen aufweisen. Die zu identifizierenden Teile müssen unabhängig von ihrem Ort oder ihrer Orientierung erkannt werden. Des weiteren dürfen Verschmutzungen der Werkstücke oder Abweichungen von ihrer Sollform die Identifikationsleistung nicht nennenswert beeinflussen. Weiterhin muß das System in der Lage sein, langsame Veränderungen der Umgebungsbedingungen, wie z.B. der Helligkeit durch einen Nachlernprozeß während der Identifikation zu kompensieren.

Aus Gründen der Wirtschaftlichkeit muß der Hardwareaufbau des Identifikationssystems möglichst einfach sein; trotzdem sollen hinreichend kurze Identifikationszeiten möglich sein.

Eine weiteres wichtiges Problem bei einer automatisierten Fertigung ist die Klassifikation; Klassifikationsalgorithmen sind ein wichtiges Werkzeug der Qualitätssicherung: Gut- und Schlechtteile eines Fertigungsprozesses müssen auseinandergehalten werden, wobei im Normalfall insbesondere die Fehlerrate in der Nicht-Erkennung von Schlechtteilen (notfalls auf Kosten der Gutteil-Erkennungsrate) klein gehalten werden muß.

Klassifikationsalgorithmen müssen die selben Unempfindlichkeiten wie Identifikationsalgorithmen beispielsweise hinsichtlich Ort und Orientierung der Werkstücke, ihrer Beleuchtung und Verschmutzung u.ä. aufweisen.

Bisher werden zur Identifikation und Klassifikation entweder konventionelle Musterverarbeitungsverfahren oder neuronale Netze eingesetzt.

Konventionelle Verfahren und neuronale Netze benutzen dabei aus Geschwindigkeitsgründen meist aus den Musterdaten extrahierte Merkmale, mit deren Hilfe dann ein Klassifikations- oder Identifikationsalgorithmus weiterarbeitet. Nachteilig ist zum einen, daß ein relativ hoher Aufwand in die problemspezifische Auswahl von Merkmalen gesteckt werden muß; zum anderen ist die Fähigkeit zum Nachlernen während des Prozesses nur gering.

Durch den Einsatz von neuronalen Netzen versucht man, das Problem des fehlenden Nachlernens zu lösen; bei neuronalen Netzen müssen jedoch (genauso wie beim Einlernen) Lernzeiten in Kauf genommen werden, die bei der momentan zur Verfügung stehenden Hardware einen Einsatz im Rahmen eines Echtzeit-Identifikationssystemes nicht zulassen.

Die bekannten Identifikations- und Klassifikationsverfahren erfordern damit entweder einen hohen Hardware-Aufwand bei dem Bildaufnahme- und dem Auswertesystem oder sie haben eine vergleichsweise schlechte Identifikations-bzw. Klassifikationsleistung.

### Darstellung der Erfindung

Der Erfindung liegt die Aufgabe zugrunde, ein Verfahren zur Klassifizierung von Objekten unter Verwendung eines elektrischen Signalaufnehmers, der die zu klassifizierenden Objekte abtastet, und für jedes Objekt M Abtastwerte liefert, die an eine Auswerteeinheit angelegt sind, anzugeben, das eine Mustererkennung ermöglicht, die industriellen Anforderungen entspricht.

Eine erfindungsgemäße Lösung dieser Aufgabe ist im Patentanspruch 1 angegeben.

Weiterbildungen der Erfindung sind Gegenstand der Unteransprüche.

Das erfindungsgemäße Verfahren zur Klassifizierung von Objekten unter Verwendung eines elektrischen Signalaufnehmers, der die zu klassifizierenden Objekte abtastet, und für jedes Objekt M Abtastwerte liefert, die an eine Auswerteeinheit angelegt sind, setzt sich aus einem einem Lernschritt, in dem durch Minimierung einer Potentialfunktion für jede von i Objektklassen ein adjungierter Prototyp erlernt wird, in dem klassenspezifische Merkmale verstärkt enthalten und für die Unterscheidung zwischen i Objektklassen irrelevante Merkmale unterdrückt sind, und einem Klassifikationsschnitt zusammen, in dem mit Hilfe einer weiteren Potentialfunktion ein zu klassifizierendes Objekt eindeutig einem der gelernten adjungierten Prototypen zugeordnet wird. Die vorstehend genannte Verstärkung relevanter und die Unterdrückung irrelevanter Merkmale ist die Beschreibung einer empirischen Beobachtung, die gemacht wird, wenn man das Verhalten des vorgeschlagenen Algorithmus auf einer Stichprobe untersucht. Ferner erfolgt die eindeutige Zuordnung zwischen einem zu klassifizierenden Objekt und einem der gelernten adjungierten Prototypen durch Scalaproduktbildung zwischen den adjungierten Prototypen der einzelnen Klassen und den zu klassifizierenden Testmuster. Hierbei wird die Klasse mit dem jeweils höchsten Scalaproduktwert gewählt.

Erfindungsgemäß werden zum Erlernen der adjungierten Prototypen pro Klasse $j > 1$ Lernobjekte verwendet und jeder adjungierte Prototyp vereint klassenspezifische Merkmale aller j Lernobjekte dieser Klasse auf sich. Hierbei werden die in dem Buch von Haken "Synergetic Computers and Cognition. A Top-Down Approach to Neural Nets", Springer, Berlin 1991, Seite 51 bis 55, enhaltenen Formeln jeweils auf mehrere Lernmuster pro Klasse erweitert. Zur Klassenzuordnung eines abgetasteten Objektes wird ferner eine Potentialfunktion aus den erlernten Prototypen gebildet, deren Minimum dem adjungierten Prototyp zugeordnet wird, der die höchste Übereinstimmung mit dem zu klassifizierenden Objekt aufweist.

Zum Klassifizieren von Objekten in einer der i Klassen wird die von diesem Objekt erhaltene Folge von M Abtastwerten durch einen synergetischen Prozeß eindeutig einem Minimum zugeordnet.

Mit dem erfindungsgemäßen Verfahren erhält man ein industriell einsetzbares Identifikations- und Klassifikationssystem für Eingangsdaten von beliebigen Sensoren, die mit optischen, akustischen oder anderen Prinzipien arbeiten. Das Auswerteverfahren beruht unabhängig vom Sensortyp auf synergetischen Prinzipien.

Von konventionellen oder neuronalen Musterverarbeitungsansätzen unterscheidet sich die Synergetik, ein von H. Haken begründetes Wissenschaftsgebiet dadurch, daß sie sich Prinzipien der Selbstorganisation, ursprünglich zur Erklärung von Musterbildung in der unbelebten Natur entwickelt, zunutze macht. Hierzu wird auf H. Haken, "Synergetics, an Introduction" Spinger, Berlin 1983 verwiesen.

Untersuchungen von synergetischen Phänomenen im Bereich der Wahrnehmung zeigen, daß auch viele motorische und kognitive Verhaltensmuster bei Lebewesen mit einem synergetischen Zugang erfolgreich beschrieben werden können. Dies ist in H. Haken, "Synergetics of Cognition", Springer, Berlin 1990" beschrieben

Haken beschränkt sich bei seiner Untersuchung von synergetischen Phänomenen jedoch auf eine Diskussion von Autoassoziativitätseigenschaften - H. Haken, "Synergetic Computers and Cognition. A Top-Down Approach to Neural Nets", Springer, Berlin 1991, S. 36-42 u. 51-59. In dieser Arbeit ist lediglich gezeigt, daß ein verrauschtes Bild mit synergetischen Verfahren wiederhergestellt werden kann. Ein industrietaugliches System auf synergetischer Basis ist bislang nicht beschrieben.

Erfindungsgemäß ist nun erkannt worden, daß die von Haken ohne konkrete Anwendung entwickelten Prinzipien zur Lösung der industriellen Problemstellungen "Identifikation und Klassifikation" eingesetzt werden können.

Die von Haken in seinem vorgenannten Buch "Synergetic Computers and Cognition. A Top-Down Approach to Neural Nets" allgemein beschriebenen synergetischen Algorithmen lehnen sich an die Grundprinzipien der Synergetik an und sind in diesem Buch auf Seite 20 bis 35 beschrieben. Eine zentrale Rolle spielen hierbei die in diesem Buch mit den Bezugsnummern Gl. 4.45, 4.49 sowie 4.54 dargestellten Gleichungen. Diese synergetischen Algorithmen werden nun derart weitergebildet, daß die Algorithmen nun in der Lage sind, mehrere Representanten bzw. Muster pro Klasse beim Einlernen zu berücksichtigen. Auf diese Weise kann das erfindungsgemäße Verfahren mit Hilfe der Lernmuster auch Testmuster erkennen, die ihm bisher nicht angeboten worden sind.

Weiterhin ist bei dem erfindungsgemäßen Verfahren auch überwachtes Lernen möglich.

Die synergetischen Algorithmen sind dabei zusätzlich in der Lage, wesentliche von unwesentlichen Merkmalen zu trennen und eine Separation der Muster, wie z.B. von Gußteilen vom Hintergrund durchzuführen. Der Begriff Hintergrund ist dabei nicht nur auf optische Muster beschränkt; bei z.B. akustischen Daten kann ein synergetisches Klassifikationsverfahren ebenso die zur Klassentrennung unnötigen Merkmale (Fourierkoeffizienten) selbständig unterdrücken.

Gegenüber konventionellen Verfahren zeichnen sich synergetische Verfahren durch eine geringe Anfälligkeit gegenüber einer Störung der Signale, kurze Einlernzeiten, kurze Nachlernzeiten, einen möglichen Verzicht auf die Auswahl von Signalmerkmalen und eine Hintergrundunabhängigkeit aus.

Synergetische Algorithmen können erfindungsgemäß insbesondere zur selbständigen Berechnung und Auswahl von relevanten Merkmalen aus ihnen angebotenen Eingangsdaten eingesetzt. Dem Algorithmus werden dabei Bilder von verkratzten und unverkratzten Oberflächen angeboten, die dieser dann selbständig erkennt. Das ihm angebotene Datenmaterial kann somit in zwei Klassen aufgeteilt werden; insbesondere können selbsttätig die Merkmale berechnet werden, die eine entsprechende Aufteilung ermöglichen. Die eben berechneten Merkmale können dann als Eingangsdaten für eine nächste synergetische Schicht verwendet werden.

Das erfindungsgemäße mehrstufige Verfahren ist außerdem in der Lage, auch komplexe, d.h. nicht linear separierbare Problemstellungen adäquat zu lösen.

Damit wird eine Einschränkung von Hakens Synergetischem Computer bzw. den aus dem Stand der Technik bekannten synergetischen Algorithmen, wie sie aus der vorstehenden Literaturstelle (H. Haken, "Synergetic Computers and Cognition. A Top-Down Approach to Neural Nets") auf Seite 7 bis 132 beschrieben sind, überwunden, denn ähnlich wie beim Übergang vom einschichtigen Perzeptron zu Multilayer-Perzeptrons ist nun keine Beschränkung auf linear separierbare Problemstellungen mehr gegeben.

Das erfindungsgemäße Verfahren läßt sich entweder mit herkömmlichen Computern realisieren, die in der Weise programmiert sind, wie dies von Haken bzw. im Rahmen der vorliegenden Beschreibung angegeben wird. Ferner ist es selbstverständlich möglich, zur Realisierung des erfindungsgemäßen Verfahrens spezielle Bauelemente einzusetzen, wie sie beispielsweise in der DE 42 36 644 A1 beschrieben sind.

**Kurze Beschreibung der Zeichnung**

Die Erfindung wird nachstehend unter Bezugnahme auf die Zeichnung näher beschrieben, in der zeigen:

| | |
|---|---|
| Fig. 1 | den Aufbau eines bei dem erfindungsgemäßen Verfahrens verwendeten Identifikationssystems, |
| Fig. 2a und 2b | Orginalbilder und adjungierte Prototypen, |
| Fig. 3 | bis 6 schematisch die Verfahrensschritte bei verschiedenen Varianten des erfindungsgemäßen Verfahrens, |
| Fig. 7 | Beispiele für verkippte und teilverdeckte erkannte Objekte, |
| Fig. 8 bis 10 | ein Beispiel für eine Merkmalsextraktion. |

**Beschreibung von Ausführungsbeispielen**

Das erfindungsgemäße Verfahren soll im folgenden exemplarisch anhand eines optischen Identifikationssystems für Räder bzw. Felgen beschrieben werden, das diese im Fertigungsprozeß unabhängig von Lage und Orientierung erkennt bzw. klassifiziert.

Fig. 1 zeigt den Aufbau des Identifikationssystems. Es besteht aus

- einer Kamera K für die Bildaufnahme, wie z.B. einer CCD-Kamera),
- einer Framegrabber-Karte für das Einlesen von Bildern in einen Rechner PC,
- dem Rechner PC für die eigentliche Bildauswertung.

Die vorstehend genannte Framegrabber-Karte rührt von einem englischen Fachbegriff für eine TC-Einsteckkarte zur Bildaufnahme her, die zur Digitalisierung analoger Videodaten dient. Mit ihrer Hilfe werden Bilder einer CCD-Kamera einem Computer verfügbar gemacht.

Mit den Bezugszeichen 1, 2 und 3 sind verschiedene Felgentypen bezeichnet, die erkannt und klassifiziert werden sollen. Mit F ist eine Felge in der Aufnahmeposition bezeichnet.

Das von dem Rechner PC gesteuerte und ausgeführte Auswertungsverfahren gliedert sich in die Teilschritte

- Bildaufnahme
- Bildvorverarbeitung
- erstes Einlernen
- Identifikation
- Nachlernen

Bei der Bildaufnahme wird das Bild der CCD-Kamera K mittels der Frame-Grabber-Karte in den Rechner PC eingelesen. Die hier verwendete Frame-Grabber-Karte arbeitet mit einer Auflösung von 768*512 pixeln. Der Triggerimpuls für die Aufnahme kann dabei entweder z.B. von einer Lichtschranke oder von einem SPS-Anschluß (SPS steht für speicherprogrammierbare Steuerung) kommen. Ebenso ist es denkbar, eine kontinuierliche Bildaufnahme zuzulassen, bei der Leerbilder in eine separate Klasse erkannt werden.

Die Bildvorverarbeitung gliedert sich in mehrere Bild-zu-Bildtransformationen, die hintereinander durchgeführt werden, um die Arbeit des Klassifikators zu vereinfachen. Derartige Transformationen sind beispielsweise in dem Buch "Digitale Bildverarbeitung" von B. Jähne, 2. Auflage, Springer, Berlin 1983 oder in dem Buch "Pattern Classification and Scene Analysis" von P. Duda und P. Hart, Wiley & Sons, New York, 1973 beschrieben.

Bei dem exemplarisch beschriebenen Verfahren erfolgt dann eine Verkleinerung des Bildes, im vorliegenden Falle auf 64*64 Pixel, da dies die Weiterverarbeitung schneller macht, ohne zu Ergebnisverschlechterungen zu führen.

In weiteren Vorverarbeitungsschritten wird eine Translations- und Rotationsinvarianz des Bildes erreicht. Hierfür bieten sich mehrere Möglichkeiten an, u. a.

- eine Kombination aus 2-dimensionaler Fast-Fourier-Transformation für die Translationsinvarianz, der anschließenden Transformation in die Polarkoordinantendarstellung mittels bilinearer Interpolation und schließlich einer eindimensionalen Fouriertransformation auf der Winkelkoordinate, um eine Rotationsinvarianz zu erreichen

- eine Separierung des Bildes (der Felge) vom Hintergrund, anschließender Verschiebung in den Schwerpunkt, wodurch Translationsinvarianz erreicht wird, und Transformation in Polarkoordinaten mit eindimensionaler Fouriertransformation auf der Winkelkoordinate für die Rotationsinvarianz.

Die Bildvektoren selbst werden vor und nach den Transformationen auf die Länge 1 normiert, um numerisch in einem stabilen Bereich zu bleiben.

Das erste Einlernen arbeitet nach dem Matrixinversionsverfahren von Haken. Das Matrixinversionsverfahren ist bereits in dem mehrfach zitierten Buch von Haken (Synergetic Computers and Cognition...) auf Seite 51 bis 55 beschrieben. Die hierbei von zentraler Bedeutung in diesem Buch angegebene Gleichung 6.7 weist eine Matrixinversion auf. Um eine bessere Repräsentation der Lernstichprobe zu erreichen, wird das von Haken beschriebene Verfahren dahingehend abgewandelt, daß der Durchschnitt über mehrere Muster pro Klasse als Prototyp verwendet wird.

Alternativ kann auch ein überwachtes synergetisches Lernverfahren verwendet werden, wie es noch beschrieben wird. Als Ergebnis des Lernprozesses werden sogenannte adjungierte Prototypen zurückgeliefert.

Fig. 2a zeigt die Orginalbilder der Felgen, während in Fig. 2b die adjungierten Prototypen mit automatischer Hintergrund-Unterdrückung dargestellt sind.

Ein zu erkennendes Muster wird denselben Vorverarbeitungsschritten unterworfen wie die Lernmuster. Anschließend werden die Skalarprodukte dieser transformierten Muster mit allen adjungierten Prototypen gebildet. Die Entscheidung fällt für die Klasse mit dem betragsmäßig höchten Skalarprodukt.

Durch den Einsatz des überwachten Lernverfahrens, das aus einer Abwandlung des Hakenschen überwachten Lernverfahrens entsteht, indem nur der attention-Parameter der gewünschten Zielklasse auf eins und alle anderen attention-Parameter auf 0 gesetzt werden, können erkannte Muster zum Verändern der adjungierten Prototypen nach jedem Lernschritt herangezogen werden und so leichte Driften von Aufnahmeparametern wie z.B. der Beleuchtung kompensiert werden.

Im folgenden soll das erfindungsgemäße Verfahren im einzelnen beschrieben werden:

Wie bereits dargelegt, werden für die Auswertung der Eingangsdaten und die Klassifizierung synergetische Algorithmen eingesetzt. Diese zeichnen sich dadurch aus, daß sie nach derselben Dynamik ablaufen, wie sie auch in natürlichen Selbstorganisationprozessen zu finden ist. Dabei tritt eine Kopplung zwischen den Einzelkomponenten des Systems entweder in Form einer globalen Kopplung oder einer lokalen Wechselwirkung zwischen den Systemkomponenten (z.B. mechanische Kräfte zwischen Flüssigkeitsteilchen bei der Entstehung der Benard-Konvektionsrollen) auf. Eine Fokker-Planck-Gleichung

$$\dot{f}(q,t) = -\frac{\partial}{\partial q}(Kf) + \frac{1}{2}\frac{Q\partial^2 f}{\partial q^2}$$

liefert die mathematische Grundlage zur Beschreibung synergetischer Phänomene. Die vorstehend zitierte Fokker-Planck Gleichuna findet sich in dem Buch von Haken "Synergetic Computers ana Cognition..." auf den Seiten 33 und 34.

Mathematische Beschreibungen von synergetischen Prozessen sind in den vorstehend genannten Schriften von H. Haken zu finden, auf die im übrigen zur Erläuterung aller hier nicht näher erläuterten Begriffe ausdrücklich Bezug genommen wird.

Mit diesen den synergetischen Prozessen zugrundeliegenden Differentialgleichungen läßt sich eine Dynamik konstruieren, mit deren Hilfe einstufige überwachte oder unüberwachte sowie mehrstufige synergetische Klassifikationsverfahren realisiert werden können.

Jedes Lernverfahren hat dabei sein spezielles Anwendungsgebiet:

Ein überwachtes Lernverfahren wird gewählt werden, wenn z.B. unterschiedlich geformte Teile jeweils einer bestimmten Klasse zugeordnet werden sollen. In einer Trainingsphase werden mehrere Repräsentanten jeder Klasse gezeigt und eingelernt. Während dieses Einlernprozesses bildet der das erfindungsgemäße Verfahren ausführende Computer sog. adjungierte Prototypen, in denen unwichtige Merkmale unterdrückt worden sind.

Am Beispiel in Fig. 2 ist zu sehen, wie solch ein synergetisches Lernverfahren in der Lage ist, in seinen eingelernten adjungierten Prototypen, die bei dem dargestellten Beispiel Felgen sind, selbständig unwichtige Merkmale zu eliminieren. Der Hintergrund in den Bildern, der in allen drei Klassen gleich ist, liefert keine wesentliche Information und wird deshalb in den Felgenklassen automatisch unterdrückt.

Im Gegensatz zu Hakens Vorgehensweise ermöglicht es das erfindungsgemäße Verfahren, auch mehr als ein Muster in eine einzelne Klasse einzulernen. Für praktische Anwendungen ist dies von großer Bedeutung, da eine Klasse meist erst durch Angabe mehrerer Lernbeispiele vollständig charakterisiert werden kann.

Die einfachste Möglichkeit der Zusammenfassung besteht in einer Durchschnittsbildung über alle Lernmuster einer Klasse. Selbst durch dieses einfache Verfahren lassen sich bereits drastische Verbesserungen in den Erkennungsraten erreichen. Mit Hilfe des sogenannten SCAP-Verfahrens (Synergetischer Computer mit Adjungierten Prototyp), kann das von Haken verwendete Verfahren (siehe Buch von Haken, "Synergetic Computers and Cognition...", S. 51-55) weitergebildet werden, als zum Lernen Mittelwerte über mehrere Lernmuster in einer Lernklasse gebildet werden. Diese Durchschnittswerte werden als neue Lernmuster $v_k$ in der Gleichung 6.2 des vorstehend zitierten Buches verwendet.

Eine weitere Möglichkeit der Verbesserung ergibt sich durch ein iterierendes Nachlernen, bei dem jeweils diejenigen Muster, die im vorherigen SCAP-Schritt nicht erfolgreich eingelernt werden konnten, im nächsten SCAP-Schritt mit einer höheren Gewichtung angeboten werden (SCAPAL-Verfahren, d.h. SCAP-Verfahren mit Additional Learning). Das Lernverhalten minimiert auf diese Weise nicht mehr den Restfehler des Systems, sondern die Anzahl der falsch gelernten Muster.

Dieses Lernverfahren läßt sich wie folgt beschreiben:

- SCAP-Schritt:
  Zunächst wird ein normaler SCAP-Algorithmus auf die Durchschnittswerten der Lerndaten angewendet und die Klassifikationsrate auf Lern- und Teststichprobe angezeigt.

- Berechnen verbesserter Prototypen:
  Alle falsch klassifizierten Muster der Lernstichprobe werden für jede Klasse aufaddiert und wieder auf 1

normiert. Diese Korrekturvektoren werden (nach Multiplikation mit einer Lernrate, d.h. einem Gewichtungsfaktor, der hier z.B. 0,05 beträgt) zu den ursprünglichen Mittelwerten hinzu addiert. Das Ergebnis wird wiederum auf 1 normiert.

- Neuer SCAP-Schritt:
  Auf die so entstandenen Vektoren werden wieder der SCAP-Algorithmus angewendet und die Erkennungsrate auf Lern- und Teststichprobe angezeigt.

- Zurück zu Schritt 2, bis das Verfahren konvergiert:
  Konvergenz heißt, daß sich Erkennungsleistung auf der Lernstichprobe nicht mehr weiter verbessert.

Auch die Verwendung von Erkennungsergebnissen - wie sicher wird ein Muster erkannt? wie groß ist sein Abstand zur nächsten Klasse? - kann als Maßzahl dafür dienen, mit welchem Gewicht ein Muster in den nächsten Iterationsschritt eingeht.

Die Erkennung übernimmt wiederum ein synergetischer Erkennungsalgorithmus: dieser ist robust gegen Störungen. In Fig. 7 sind Beispiele von Objekten zu sehen, die trotz Verkippung oder Teilverdeckung richtig erkannt wurden.

Eine weitere Möglichkeit der Verbesserung ergibt sich durch ein MLSC-Verfahren (Multilayer Synergetik Computer). Das MLSC-Verfahren vereint die Vorzüge von (bisher einstufigen) Synergetischen Computern und (mehrstufigen) Perceptronnetzen, die aufgrund ihrer Mehrstufigkeit auch nicht linear separierbare Problemstellungen richtig klassifizieren können.

In Fig. 3 ist ein Beispiel für den Aufbau eines mehrstufigen synergetischen MLSC-Verfahrens dargestellt. Im Gegensatz zur Topologie eines z.B. Multilayer-Perceptron-Netzes (siehe Rumelhart, McClelland, "Parallel Distributed Processing: Exploration in the Microstructure of Cognitition") ist in jeder Schicht eine laterale Hemmung zwischen den einzelnen Neuronen vorhanden (winner-takesall). Unter dem "Winner-takes-all-Prinzip" versteht man beispielsweise, daß ein aktiviertes Neuron einer Musterklasse, die am stärksten aktiviert ist, gewinnt gegen alle anderen und unterdrückt diese (s. hierzu auch Haken, "Synergetic Computers and Cognitition...", Seite 56 bis 59). Außerdem wird das Lernverhalten des synergetischen Netzes durch globale Parameter bestimmt, die erst durch den Selbstorganisationsprozeß entstanden sind, den sogenannten Ordnungsparametern.

Ein Lernvorgang läuft dabei so ab, daß die 2. Schicht (versteckte Schicht, hidden layer) die Muster aus der ersten Schicht vollständig einlernt. Erst wenn eine Maßzahl anzeigt, daß der Lernvorgang beendet ist, werden die Skalarprodukte der ersten Schicht an die Nichtlinearitäten weitergegeben und dann an die nächste Schicht weitergereicht. Auf diese Weise sind in der "hidden layer" Merkmale extrahiert worden.

Die Nichtlinearitäten in den Kopplungen sind äußerst wichtig, da eine lineare Kopplung von mehreren Schichten immer durch eine einzige Schicht ausgedrückt werden könnte und somit gegenüber einem einfachen einschichtigen Synergetischen Computer keine Vorteile bringen würde.

U.U. macht es Sinn, die Gewichte zwische höheren Schichten durch einen überwachten Lernvorgang anzupassen.

Ein erfindungsgemäßes synergetisches Lernverfahren (SSC für Supervised Synergetic Computer) sieht folgendermaßen aus: Anstatt wie beim unüberwachten Lernen die sog. attention parameter (s. hierzu auch Haken, "Synergetic Computers and Cognitition"..., S. 52 und S. 212). in der Lern-Differentialgleichung alle gleich 1 zu setzen (gleiche Aufmerksamkeit für jede Musterklasse), wird nur der Parameter der Klasse, in die das Muster eingelernt werden soll, auf 1 gesetzt (höchste Aufmerksam-keit), alle anderen aber auf 0 (geringste Aufmerksamkeit). Auf diese Art und Weise lassen sich Muster in bestimmte Klassen zwingen. Folgendes Differentialgleichungssystem könnte für überwachtes synergetisches Lernen verwendet werden:

$$\dot{v}_k^+ = \lambda (v_k^+ q) q - B \sum_{k \neq k'} (v_k^+ q)(v_{k'}^+ q) q - C \sum_{k'} (v_k^+ q)(v_{k'}^+ q)^2 + \gamma_1 [2 (v_k q) q - \sum_{k'} (\bar{v}_k v_{k'})(v_{k'}^+ q) q) - \sum_{k'} (\bar{v}_k q)(\bar{v}_{k'} q) v_{k'}^+]$$

$$\dot{v}_k = \gamma_1 [2 (v_k^+ q) q - \sum_{k'} (v_{k'}^+ q)(v_k^+ q) v_{k'} - \sum_{k'} (v_k^+ \bar{v}_{k'}^+)(\bar{v}_{k'} q) q]$$

Im wesentlichen beschreiben die einzelnen Terme dieses Gleichungssystems das Lernziel in Form einer zu minimierenden Energiefunktion, wie in H.Haken, "Synergetic Computers and Cognition. A Top-Down Approach to Neural Nets.", Springer, Berlin 1991, S. 36-42 u. 51-59, bereits näher beschrieben.

Eine wesentliche Weiterbildung gegenüber dem Stand der Technik besteht nun darin, die attention-Parameter nicht alle konstant auf 1 zu setzen, sondern jeweils nur den Parameter von 0 verschieden zu wählen, der zur Klasse des gerade angebotenen Musters gehört. Auf diese Weise ändert sich das Lernverhalten des Algorithmus qualitativ. Aus einem vorher unüberwachten Lernverfahren wird ein überwachtes Lernverfahren.

Die vorstehend beschriebenen Verfahren sind in den Figuren 4 bis 6 schematisch dargestellt.

Die obere Darstellung gemäß Figur 4 beschreibt die an sich bekannte Tatsache, daß in jede gelernte Musterklasse nur maximal ein Lernbeispiel (A, B, C) eingeht. Mit Hilfe des erfindungsgemäßen synergetischen Lernverfahrens ist es nunmehr gemäß unterer Darstellung der Figur 4 möglich, daß mehrere Lernmuster (A, A, A) in eine Musterklasse Eingang finden könnten.

Bisher bekannte Lernverfahren, liefen unüberwacht ab, d.h. beispielsweise, daß während des Lernvorganges nicht beeinflußt werden konnte, welches Ausgangsneuron beim Anlegen eines Lernmusters aktiviert sein soll. Dieser unüberwachte Lernprozeß ist im oberen Teilbild der Figur 5 dargestellt. Im Gegensatz hierzu ist es mit Hilfe des erfindungsgemäßen synergetischen Lernverfahrens nunmehr möglich, daß während des Lernprozesses beeinflußt werden kann, welches der Ausgangsneuronen bei Anlegen eines Lernmusters aktiviert ist (s. hierzu untere Teilbilddarstellung gemäß Fig. 5).

Aus der oberen Darstellung gemäß Figur 6 geht eine schematisierte Darstellung eines synergetischen Lernverfahrens mit nur einer einzigen Aktivitätsschicht bzw. Neuronenschicht hervor, wodurch das Lernverfahren nur bedingt komplex ist. Gemäß unterer Darstellung aus Figur 6 wird das erfindungsgemäße synergetische Lernverfahren dargestellt, das durch Einfügen zusätzlicher Nichtlinearitäten den Aufbau mehrschichtiger synergetischer Computer ermöglicht, die entsprechend komplexere Merkmalsräume abbilden können.

Wie sich herausgestellt hat, wird selbst bei Verkippung, Teilverdeckung oder Verschmutzung - wie in Fig. 7 dargestellt - der richtige Radtyp mit hoher Wahrscheinlichkeit bestimmt. Außerdem ist das System in der Lage, durch ein Nachlernen während des Identifikationsprozesses eine Drift in den Umgebungsbedingungen (wie z.B. der Beleuchtung) auszugleichen. Der Hintergrund der Räder spielt dabei für den Erkennungsprozeß keine Rolle.

Im Falle der Produktumstellung ist das System in der Lage, durch ein Nachlernen während des Identifikationsprozesses eine Drift in den Umgebungsbedingungen (wie z.B. der Beleuchtung) auszugleichen. Der Hintergrund der Räder spielt dabei für den Erkennungsprozeß keine Rolle.

Im Falle der Produktumstellung ist das System beispielsweise in der Lage, ohne längere Unterbrechung des Prozesses einen neuen Satz von Radklassen einzulernen.

Dabei ist sowohl die Tatsache wichtig, daß für die Identifikation keine speziell aussagekräftigen Merkmale des Werkstücks bestimmt werden müssen, als auch die kurze Rechenzeit, die für den eigentlichen Lernalgorithmus benötigt wird.

Die Auswertung der aufgenommenen Bilder kann ohne Einsatz spezieller Hardware erfolgen. Für die Identifikation wird ein synergetisches Verfahren verwendet. Gegenüber konventionellen Systemen zeichnet sich dieser Aufbau durch

- eine geringe Anfälligkeit gegenüber Störungen des Bildes
- die kurzen Einlernzeiten
- kurze Nachlernzeiten
- den Verzicht auf die Auswahl problemspezifischer Bildmerkmale

aus.

Eine weitere Einsatzmöglichkeit für das erfindungsgemäße Verfahren ist die Extraktion von Merkmalen. Unüberwachte Synergetische Algorithmen können auf diese Art in einer ersten (merkmalextrahierenden) Stufe eines Erkennungssystems zum Einsatz kommen.

Ein Beispiel ist in den Fig. 8, 9 und 10 dargestellt, in denen ein unüberwachter synergetischer Algorithmus aus zufällig ausgerichteten Strichen die Merkmale horizontal und vertikal herausextrahiert. Die Figuren 8 und 9 zeigen vertikale bzw. horizontale Striche, die als Lerndaten für die Merkmalsextraktion unüberwacht angeboten werden. Figur 10 zeigt, daß sich die beiden Prototypen selbständig auf je eine Richtung, d.h. je ein Merkmal spezialisieren.

Die Erfindung ist vorstehend anhand eines Ausführungsbeispiels ohne Beschränkung des allgemeinen Erfindungsgedankens beschrieben worden, innerhalb dessen selbstverständlich die verschiedensten Modifikationen möglich sind:
So ist an Stelle herkömmlicher Computer zur Durchführung des erfindungsgemäßen Verfahrens der Einsatz von spezieller synergetischer Hardware, wie z.B. des in der DE 42 36 644 A1 beschriebenen Synistors möglich, mit deren Hilfe der synergetische Lern- oder Erkennungsprozeß bei einem industriellen Identifikations- oder Klassifikationsproblem schneller als mit konventionellen Rechnern durchgeführt werden kann. Weiterhin ist auch eine Kombination mit optischen Vorverarbeitungsschritten möglich.

Auch können für synergetische Verfahren Parallelcomputer eingesetzt werden. Synergetische Algorithmen lassen sich besonders leicht parallelisieren und bieten sich deshalb für eine Implementation auf Parallelcomputern an.

**Patentansprüche**

1. Verfahren zur Klassifizierung von Objekten unter Verwendung eines elektrischen Signalaufnehmers, der die zu klassifizierenden Objekte abtastet, und für jedes Objekt M Abtastwerte liefert, die an eine Auswerteeinheit angelegt sind,

   mit einem Lernschritt in dem durch Minimierung einer Potentialfunktion für jede von i Objektklassen ein adjungierter Prototyp erlernt wird,

in dem klassenspezifische Merkmale verstärkt enthalten und für die Unterscheidung zwischen i Objektklassen irrelevante Merkmale unterdrückt sind,
und einem Klassifikationsschnitt, in dem mit Hilfe einer weiteren Potentialfunktion ein zu klassifizierendes Objekt eindeutig einem der gelernten adjungierten Prototypen zugeordnet wird,
wobei zum Erlernen der adjungierten Prototypen pro Klasse j > 1 Lernobjekte verwendet werden und jeder adjungierte Prototyp klassenspezifische Merkmale aller j Lernobjekte dieser Klasse auf sich vereint und
zur Klassenzuordnung eines abgetasteten Objektes eine Potentialfunktion aus den erlernten Prototypen gebildet wird, deren Minimum dem adjungierten Prototyp zugeordnet wird, der die höchste Übereinstimmung mit dem zu klassifizierenden Objekt aufweist.

**2.** Verfahren nach Anspruch 1,
dadurch **gekennzeichnet**, daß das Lernverfahren ein einstufiges Verfahren ist.

**3.** Verfahren nach Anspruch 1,
dadurch **gekennzeichnet**, daß das Lernverfahren ein mehrstufiges Verfahren unter Einbeziehung lateraler Hemmungen ist.

**4.** Verfahren nach Anspruch 3,
dadurch **gekennzeichnet**, daß die Schichten durch Nichtlinearitäten gekoppelt sind.

**5.** Verfahren nach einem der Ansprüche 1 bis 4,
dadurch **gekennzeichnet**, daß das Lernverfahren ein überwachtes Verfahren ist.

**6.** Verfahren nach einem der Ansprüche 1 bis 5,
dadurch **gekennzeichnet**, daß zur selbständigen Berechnung und Auswahl von relevanten Merkmalen aus Eingangsdaten als Lernbeispiele Gutteile und Schlechtteile angeboten werden, aus deren Abtastwerten die Merkmale berechnet werden, die eine entsprechende Aufteilung ermöglichen.

**7.** Verfahren nach Anspruch 6,
dadurch **gekennzeichnet**, daß die berechneten Merkmale als Eingangsdaten für eine nächste synergetische Schicht verwendet werden.

**8.** Verfahren nach Anspruch 1,
dadurch **gekennzeichnet**, daß eine Durchschnittsbildung über alle Objekte einer Klasse erfolgt.

**9.** Verfahren nach Anspruch 8,
dadurch **gekennzeichnet**, daß ein iterierendes Nachlernen durchgeführt wird, bei dem jeweils diejenigen Objekte, die bei der vorherigen Durchschnittsbildung nicht erfolgreich eingelernt werden konnten, in der darauffolgenden Durchschnittsbildung mit einer höheren Gewichtung angeboten werden.

**10.** Verfahren nach Anspruch 3 oder 4,
dadurch **gekennzeichnet**, daß Schichten mit überwachten und unüberwachten Lernverfahren gekoppelt sind.

**11.** Verfahren nach einem der Ansprüche 5 bis 10,
dadurch **gekennzeichnet,** daß zur Realisierung eines überwachten synergetischen Lernverfahrens der "attention-Parameter" der Klasse, in die ein Muster eingelernt werden soll, auf eins und alle anderen attention-Parameter auf null gesetzt werden.

**12.** Verfahren nach einem der Ansprüche 1 bis 11,
dadurch **gekennzeichnet**, daß die Potentialfunktion durch Lösen einer Fokker-Planck-Gleichung erhalten wird.

**13.** Verfahren nach einem der Ansprüche 1 bis 12,
dadurch **gekennzeichnet**, daß das aufgenommene Bild zur Separation und Korrektur von unterschiedlichen Blickwinkeln etc. optisch und/oder elektronisch vorverarbeitet wird.

**14.** Verwendung des Verfahrens nach einem der Ansprüche 1 bis 13 für die Merkmalsextraktion.

**Claims**

**1.** A process for the classification of objects using an electric signal receiver which scans the objects to be classified and delivers for each object M scanned values,

which are applied to an evaluation unit,
having a learning step in which by minimization of a potential function for each of i object classes an adjoint prototype is learned, in which class-specific features are contained intensified and features irrelevant for differenciating between i object classes are suppressed, and
a classification averaging step, in which with the aid of another potential function an object to be classified is unequivocally assigned to one of said learned adjoint prototypes,
with, in order to learn said adjoint prototype per class, j>1 learning objects are utilized and each adjoint prototype combines class-specific features of all said j learning objects of said class and
in order to assign a scanned object to a class, a potential function is formed from said learned

prototype, the minimum of which is assigned to the adjoint prototype which coincides the most with the to-be-classified object.

2. A process according to claim 1, **characterized by** said learning process being a one-step process.

3. A process according to claim 1, **characterized by** said learning process being a multistep process using lateral inhibitors.

4. A process according to claim 3, **characterized by** said layers being coupled by means of nonlinearities.

5. A process according to one of the claims 1 to 4, **characterized by** said learning process being a supervised process.

6. A process according to one of the claims 1 to 5, **characterized by**, for automatic calculation and selection of relevant features from the input data, good parts and poor parts being offered as learning examples, said features being calculated from the scanned values of said parts, permitting corresponding separation.

7. A process according to claim 6, **characterized by**, said calculated features being utilized as input data for a next synergetic layer.

8. A process according to claim 1, **characterized by** averaging all the objects of one class occuring.

9. A process according to claim 8, **characterized by** one iterating followup learning being carried out, in which those objects which were not successfully learned in the previous averaging are offered with a greater weighing in the succeeding averaging.

10. A process according to claim 3 or 4, **characterized by** said layers being coupled with supervised and unsupervised learning processes.

11. A process according to one of the claims 5 to 10, **characterized by**, for realization of a supervised synergetic learning process, the "attention parameter" of the class in which a pattern is to be learned being set to one and all the other attention parameters being set to zero.

12. A process according to one of the claims 1 to 11, **characterized by** said potential function being obtained by solving a Fokker-Plank equation.

13. A process according to one of the claims 1 to 12, **characterized by** the recorded image being optically and/or electronically preprocessed for separation and correction of varying angles of view, etc.

14. Utilization of the process according to one of the claims 1 to 13 for the feature extraction.

**Revendications**

1. Procédé pour classer des objets en utilisant un capteur électrique de signaux qui explore les objets à classer et délivre pour chaque objet M valeurs d'exploration qui sont envoyées à une unité d'exploitation, incluant

   une phase d'apprentissage pendant laquelle un prototype adjoint, qui contient des caractéristiques spécifiques aux classes à l'état renforcé et dans lequel des caractéristiques peu importantes pour la différenciation entre i classes d'objets sont supprimées, est appris par minimisation d'une fonction de potentiel pour chacune de i classes d'objets, et
   une phase de classement, pendant laquelle un objet devant être classé est associé de façon nette à l'un des prototypes adjoints appris, à l'aide d'une autre fonction de potentiel,
   selon lequel pour l'apprentissage des prototypes adjoints on utilise j > 1 objets d'apprentissage pour chaque classe et chaque prototype adjoint réunit en soi des caractéristiques, spécifiques à une classe, de l'ensemble des j objets d'apprentissage de cette classe, et
   pour l'association d'un objet exploré à une classe, une fonction de potentiel est formée à partir des prototypes appris, fonction dont le minimum est associé au prototype adjoint, qui présente la concordance maximale avec l'objet à classer.

2. Procédé selon la revendication 1, caractérisé en ce que le procédé d'apprentissage est un procédé exécuté en une étape.

3. Procédé selon la revendication 1, caractérisé en ce que le procédé d'apprentissage est un procédé en plusieurs étapes, avec insertion de d'inhibitions latérales.

4. Procédé selon la revendication 3, caractérisé en ce que les couches sont couplées par des non linéarités.

5. Procédé selon l'une des revendications 1 à 4, caractérisé en ce que le procédé d'apprentissage est un procédé contrôlé.

**6.** Procédé selon l'une des revendications 1 à 5, caractérisé en ce que des pièces bonnes et des pièces mauvaises, à partir des valeurs d'exploration desquelles sont calculées des caractéristiques qui permettent une répartition correspondante, sont proposées en tant qu'exemples d'apprentissage pour le calcul et la sélection automatiques de caractéristiques importantes à partir de données d'entrée.

**7.** Procédé selon la revendication 6, caractérisé en ce que les caractéristiques calculées sont utilisées en tant que données d'entrée pour une couche synergique suivante.

**8.** Procédé selon la revendication 1, caractérisé en ce qu'une formation de moyenne est exécutée sur tous les objets d'une classe.

**9.** Procédé selon la revendication 8, caractérisé en ce qu'un post-apprentissage itératif est exécuté, lors duquel respectivement les objets, qui n'ont pas pu être appris avec succès lors de la formation de la moyenne précédente, sont proposés dans la formation de la moyenne suivante avec une pondération accrue.

**10.** Procédé selon la revendication 3 ou 4, caractérisé en ce que des couches sont couplées à des procédés d'apprentissage contrôlés et non contrôlés.

**11.** Procédé selon l'une des revendications 5 à 10, caractériséen ce que pour la mise en oeuvre d'un procédé d'apprentissage synergique contrôlé, le "paramètre d'attention" de la classe, dans laquelle un modèle doit être appris, est positionné à un et tous les autres paramètres d'attention sont positionnés à zéro.

**12.** Procédé selon l'une des revendications 1 à 11, caractérisé en ce que la fonction de potentiel est obtenue par résolution d'une équation de Fokker-Planck.

**13.** Procédé selon l'une des revendications 1 à 12, caractérisé en ce que l'image enregistrée subit un prétraitement optique et/ou électronique pour la séparation et la correction d'angles d'observation différents, etc.

**14.** Application du procédé selon l'une des revendications 1 à 13, pour l'extraction de caractéristiques.

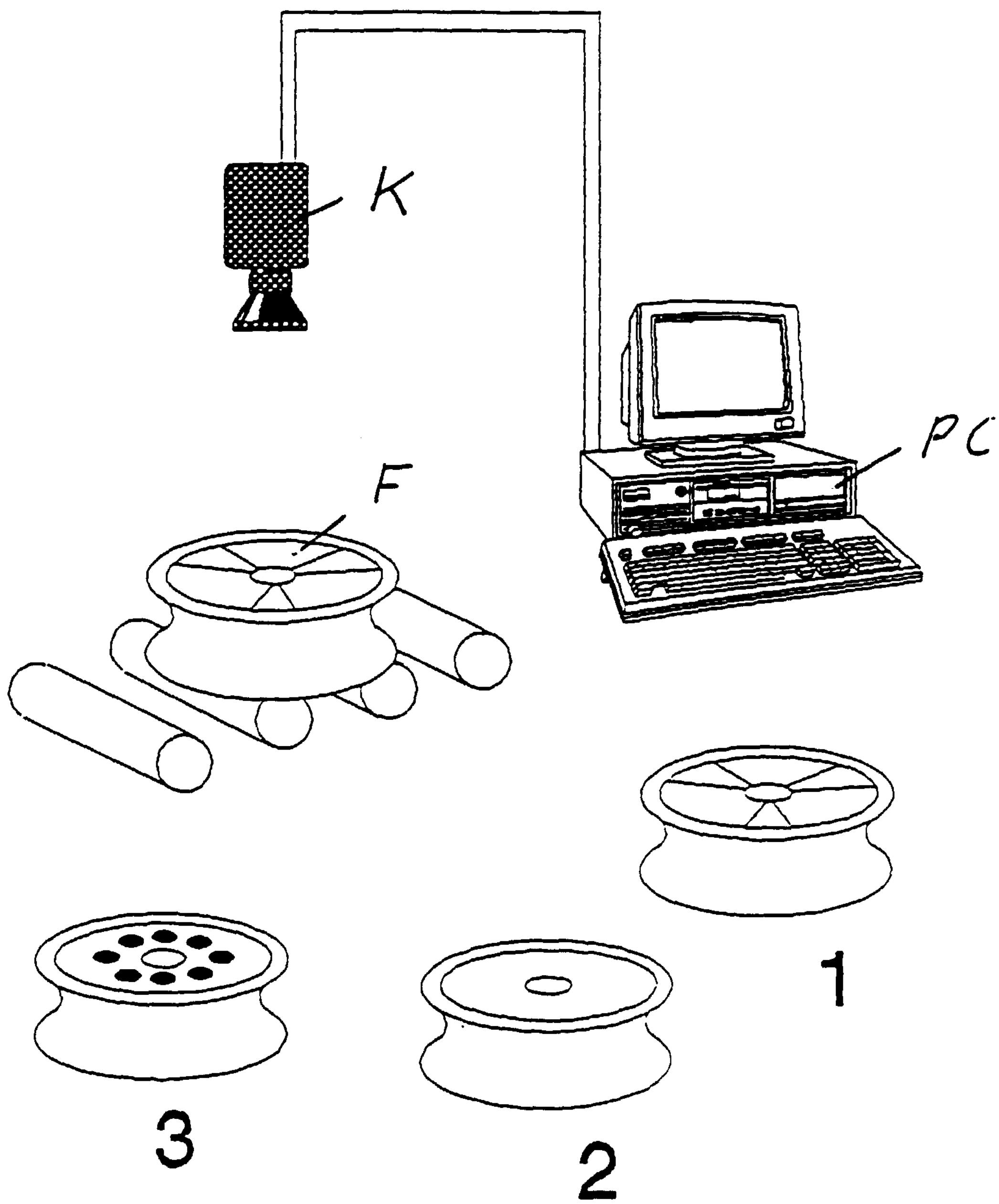


FIG. 1

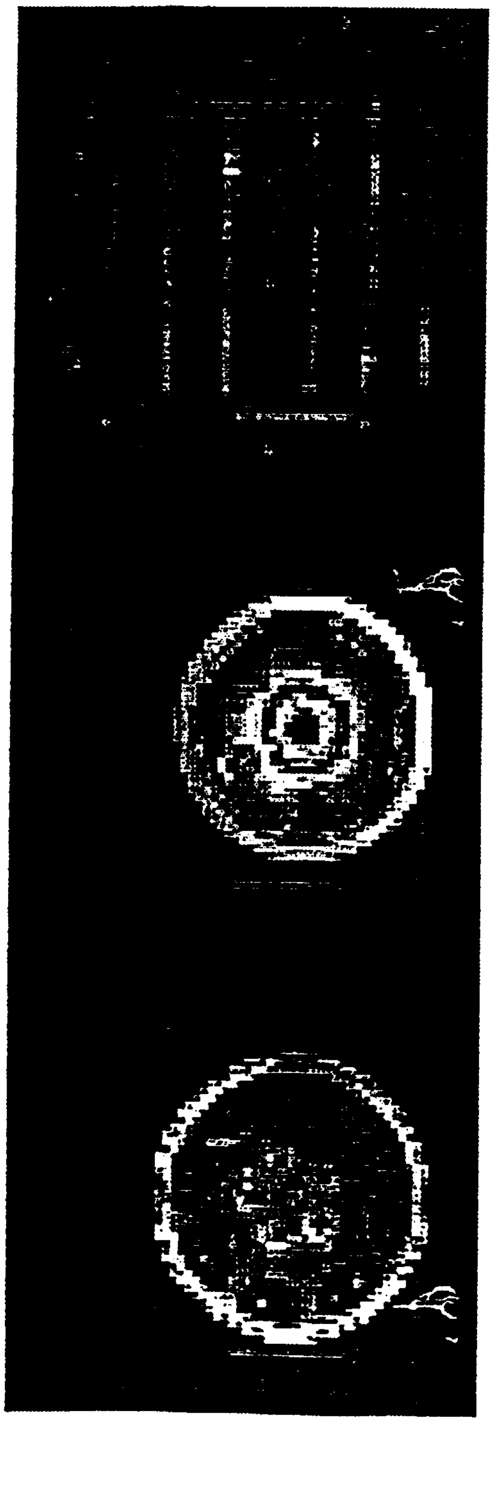

FIG. 2a

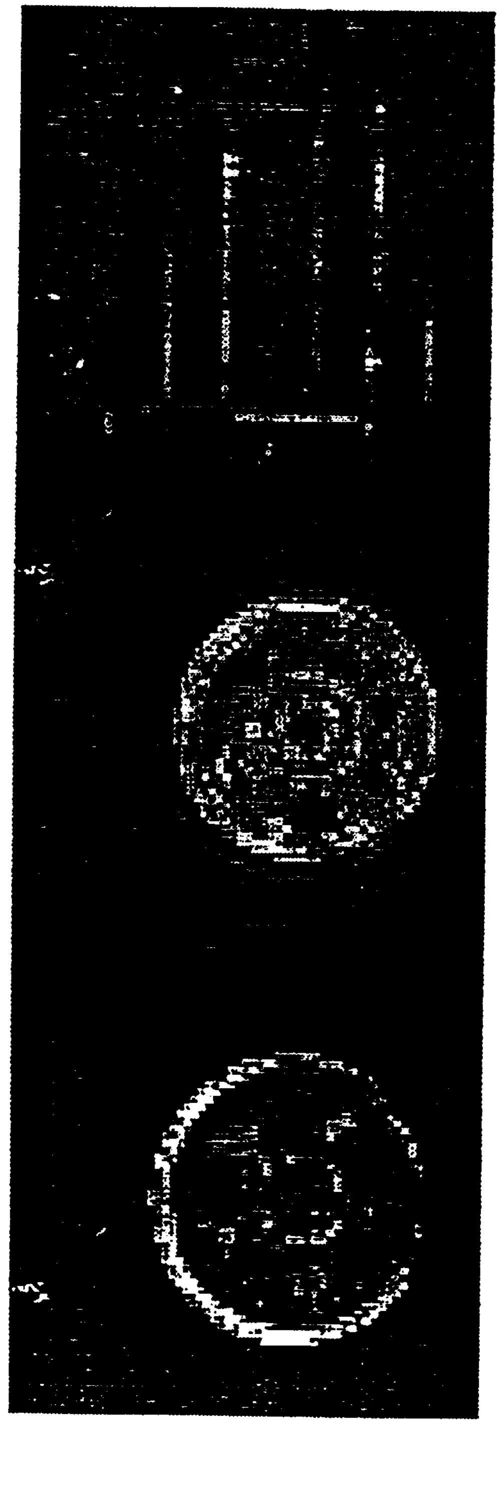

FIG. 2b

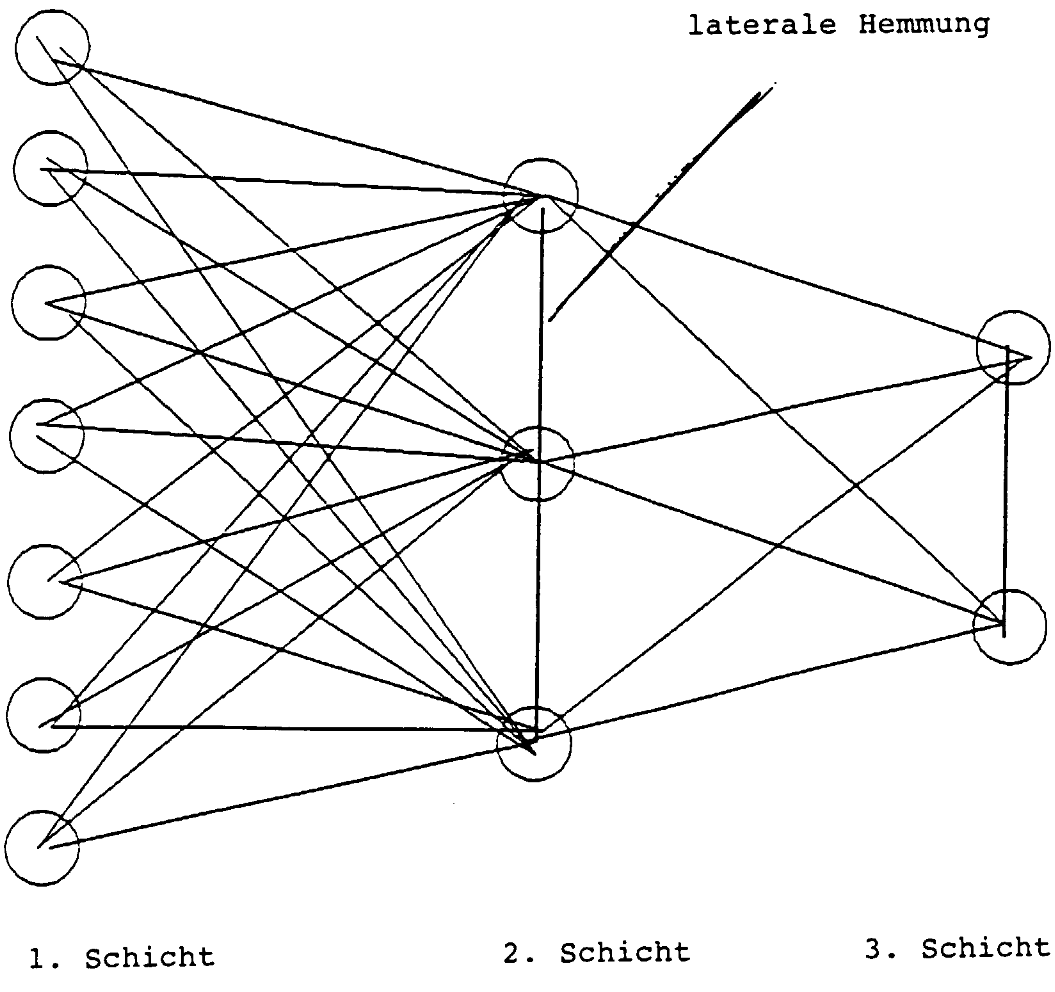


FIG. 3

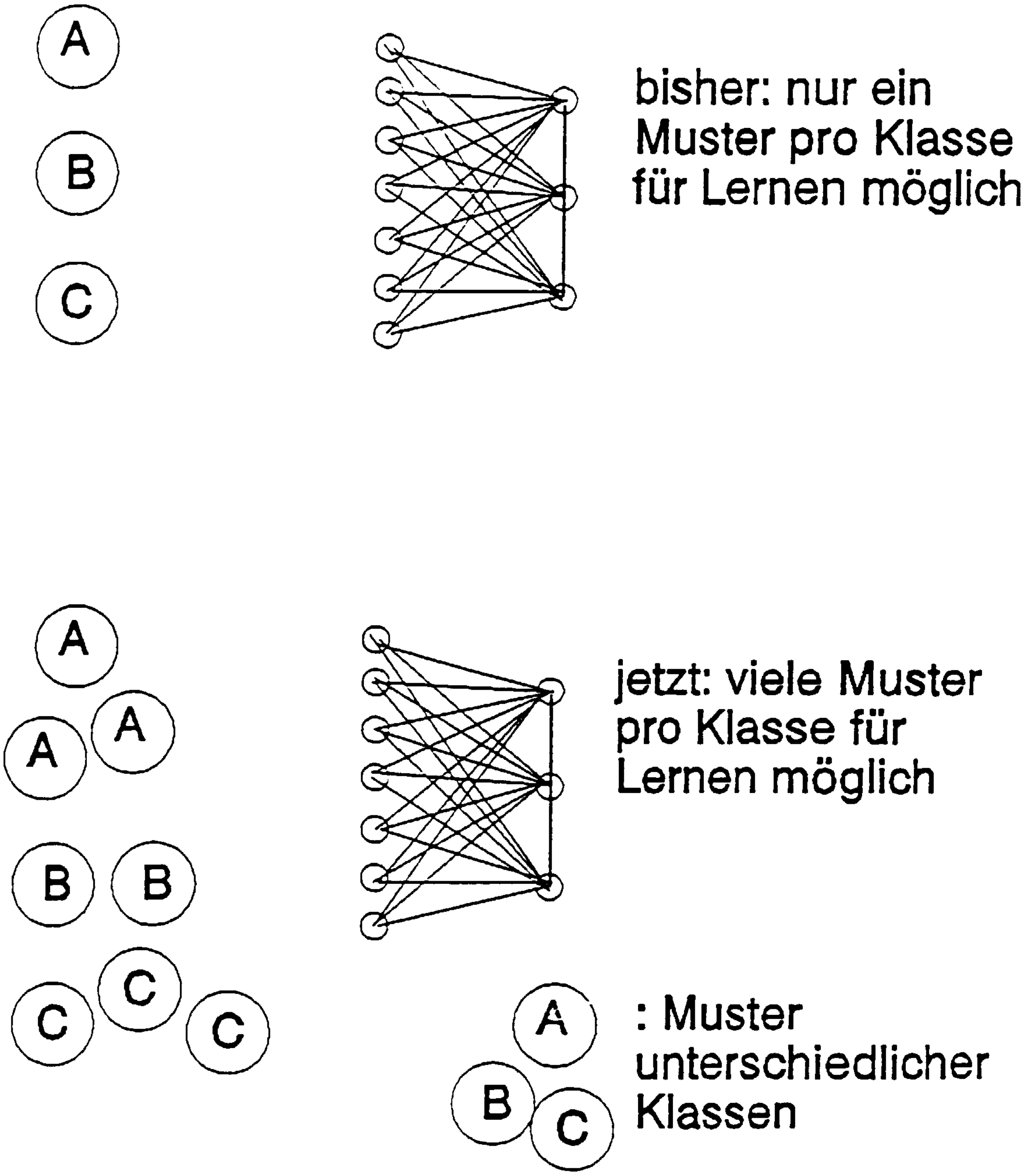
A
B
C
bisher: nur ein Muster pro Klasse für Lernen möglich
A
A
A
B
B
C
C
C
jetzt: viele Muster pro Klasse für Lernen möglich
A
B
C
: Muster unterschiedlicher Klassen

FIG. 4

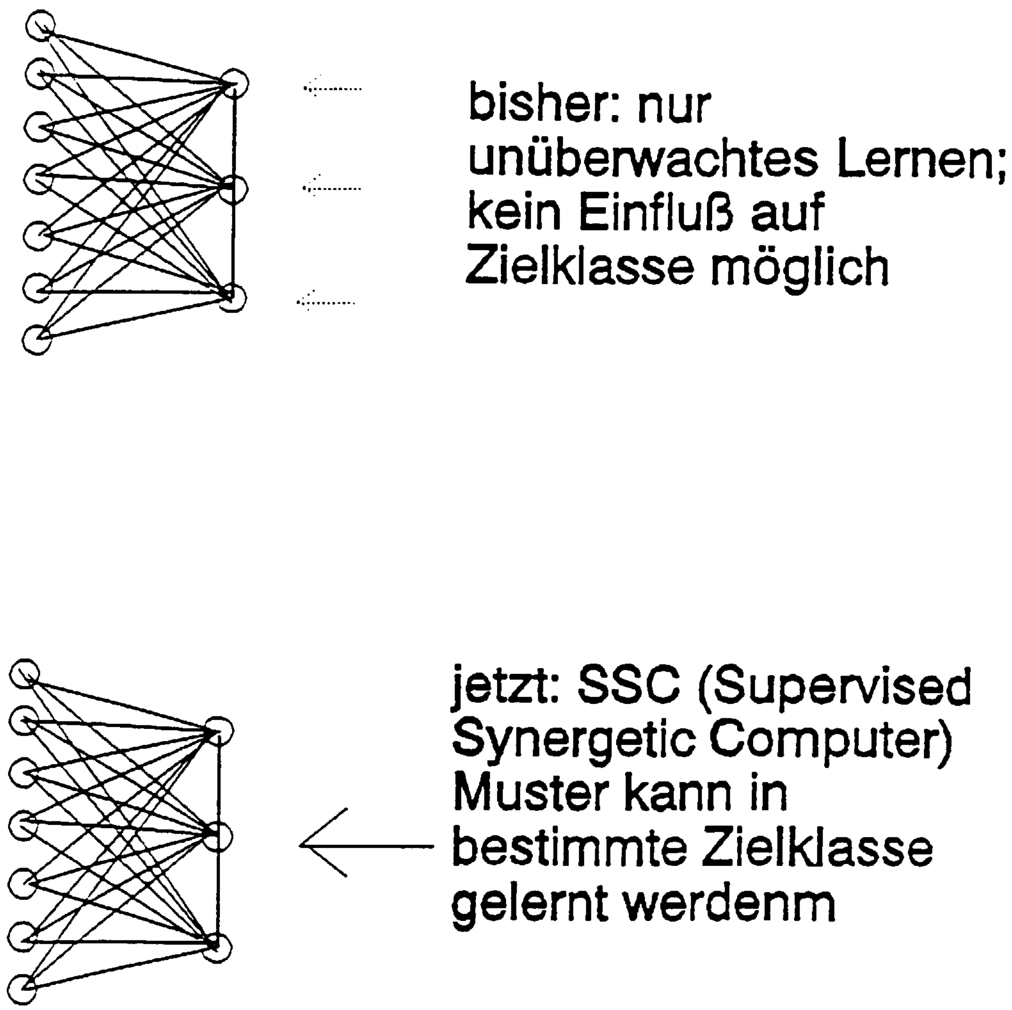
bisher: nur
unüberwachtes Lernen;
kein Einfluß auf
Zielklasse möglich
jetzt: SSC (Supervised
Synergetic Computer)
Muster kann in
bestimmte Zielklasse
gelernt werdenm

FIG. 5

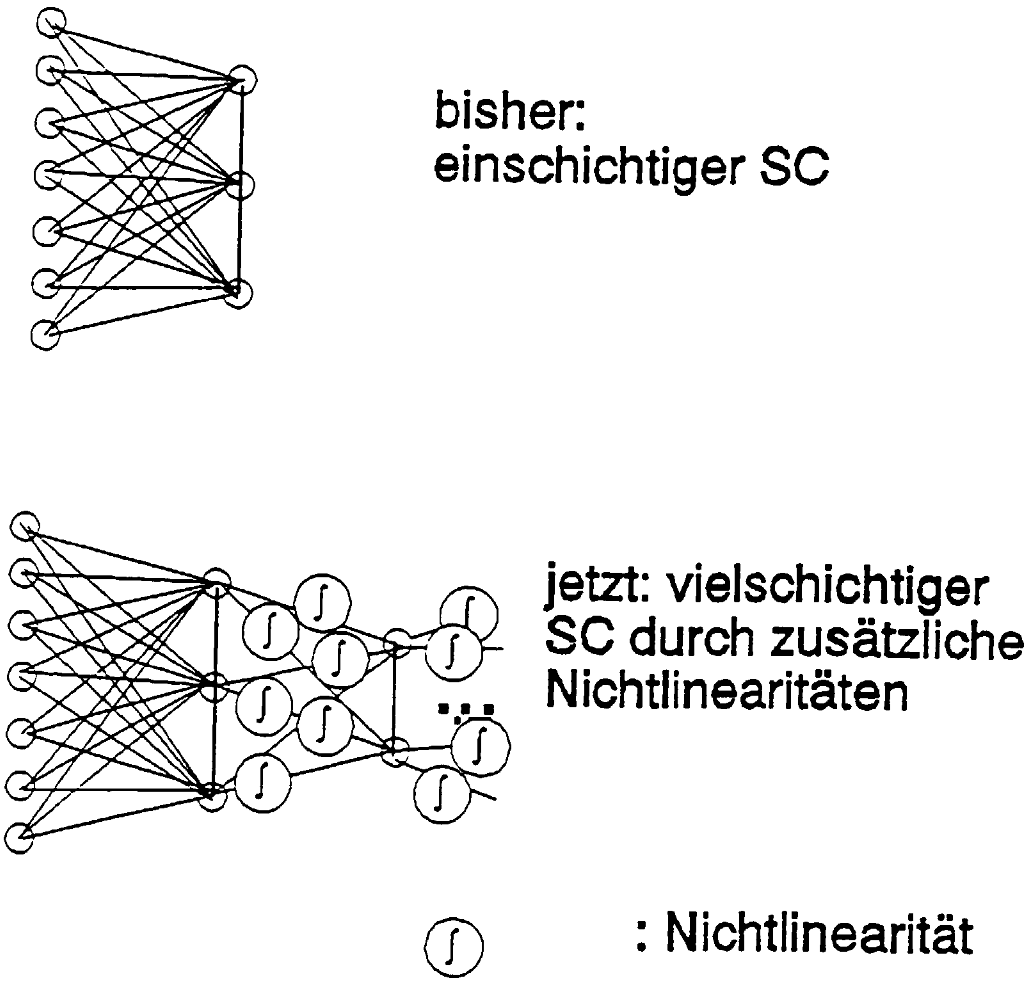
bisher:
einschichtiger SC
jetzt: vielschichtiger
SC durch zusätzliche
Nichtlinearitäten
: Nichtlinearität

FIG. 6

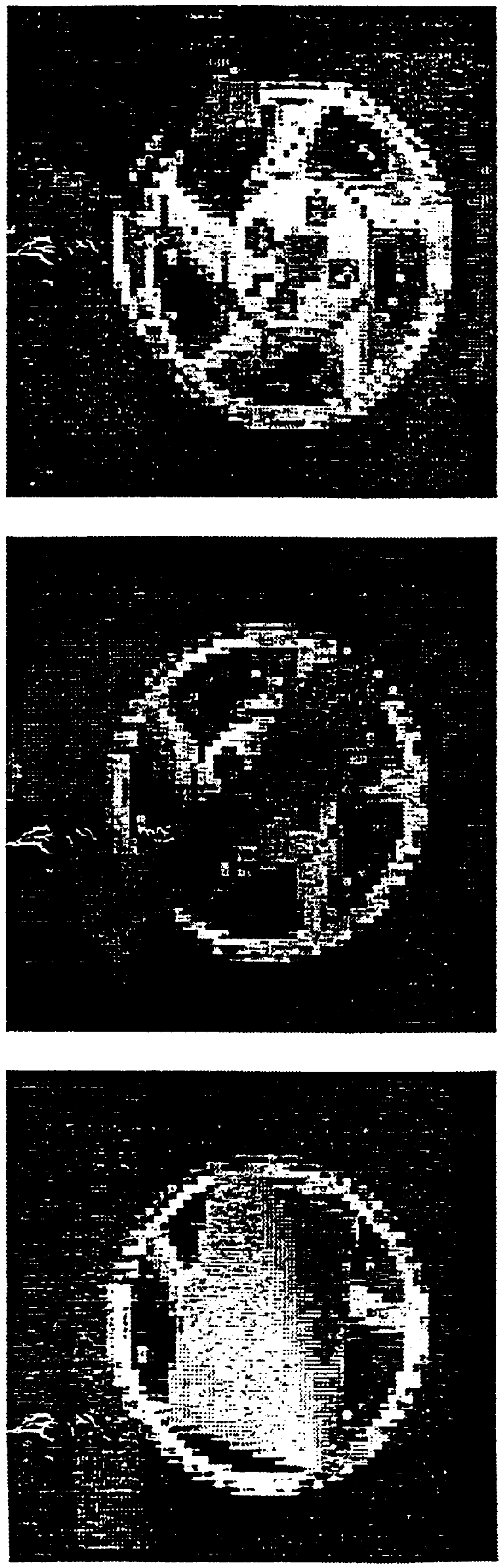

FIG. 7

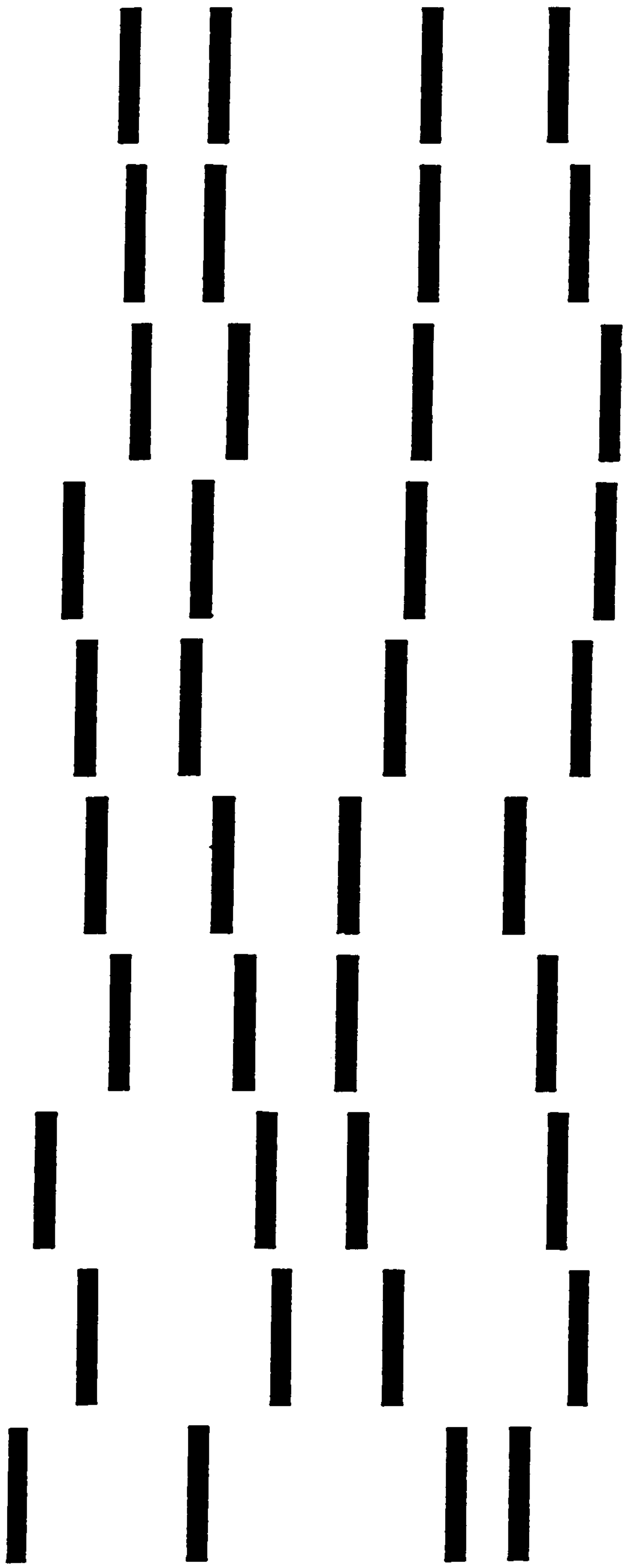

FIG. 8

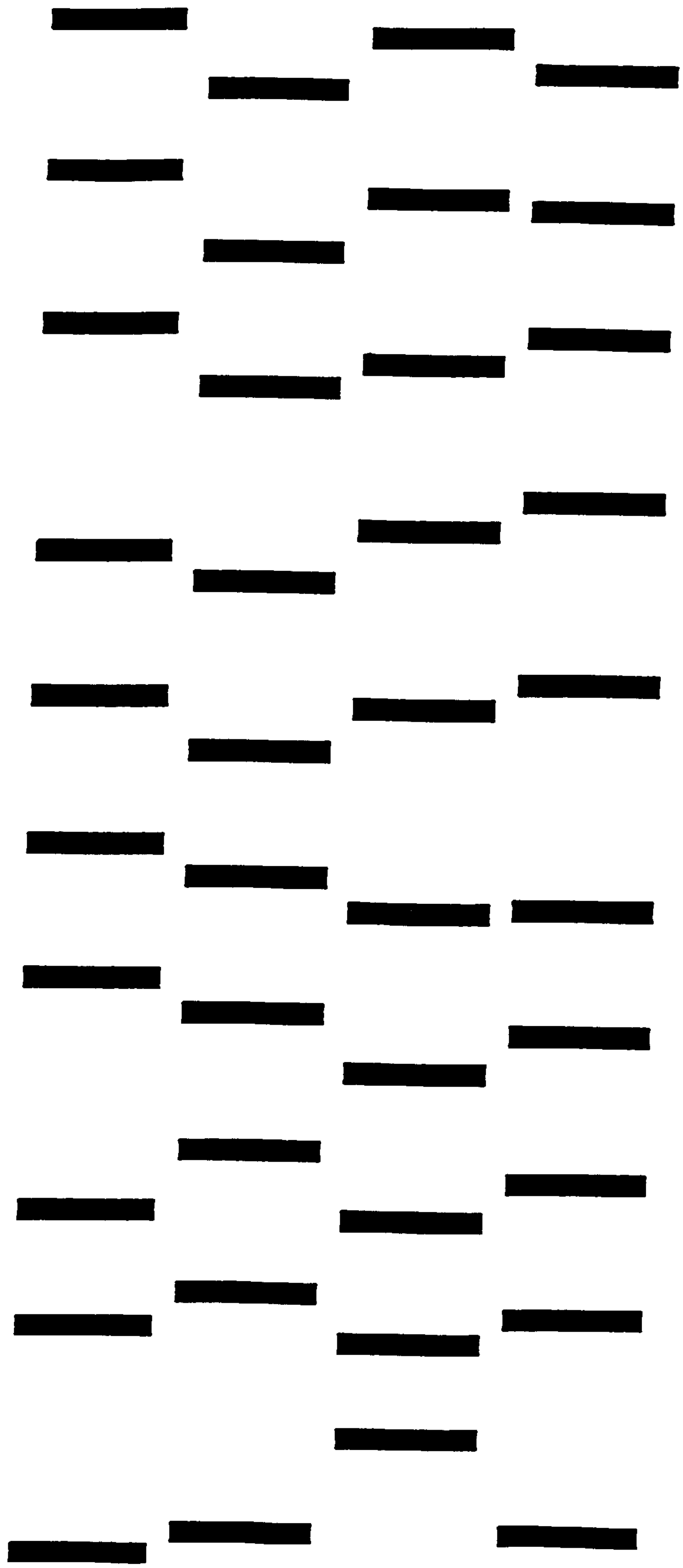

FIG. 9

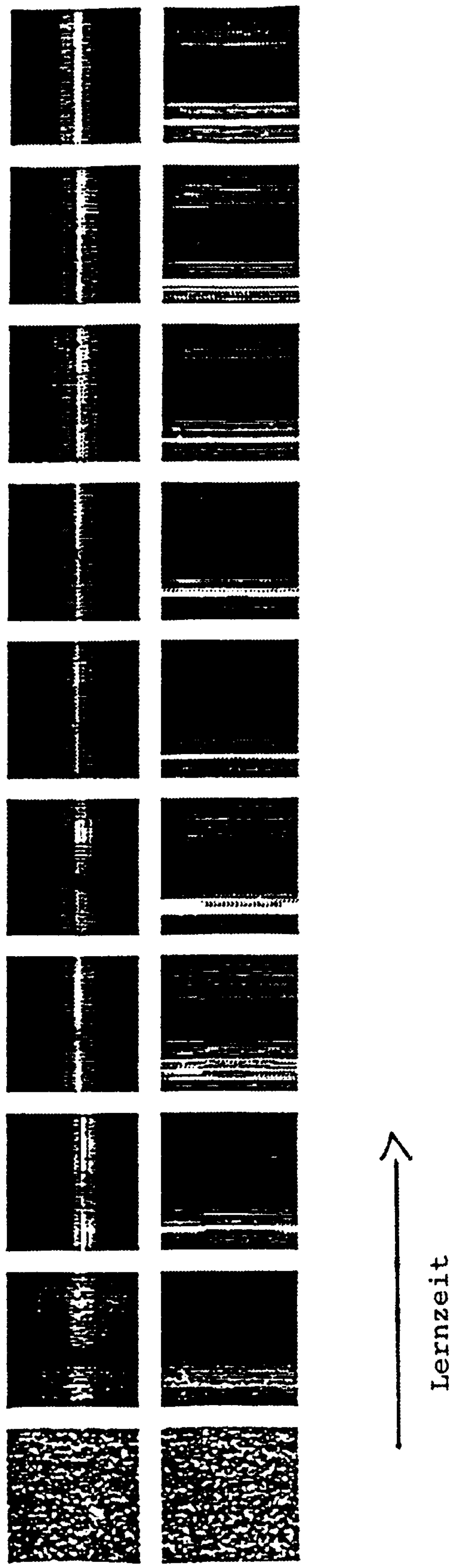


FIG. 10